# EUROPÄISCHE PATENTSCHRIFT

(11) **EP 1 577 682 B1**
(45) Veröffentlichungstag und Bekanntmachung des Hinweises auf die Patenterteilung: **08.09.2010**
(21) Anmeldenummer: 05100163.4
(22) Anmeldetag: 13.01.2005
(51) Int. Cl.: G01S 13/72, G05D 1/02, B60Q 1/52, G08G 1/16

(54) **Objektortungssystem für Kraftfahrzeuge zur Erkennung eines Spurwechsels**
Object locating system for vehicles to recognize lane change
Système de localisation d'objets pour véhicule automobile pour identifier des procédures de changement de voie

(30) Priorität: 20.03.2004 DE 102004013818
(43) Veröffentlichungstag der Anmeldung: 21.09.2005
(73) Patentinhaber: ROBERT BOSCH GMBH, 70442 Stuttgart (DE)
(72) Erfinder: Trautmann, Toralf, 70469 Stuttgart (DE)

(56) Entgegenhaltungen:
- EP-A- 0 915 350
- EP-A- 0 934 846
- DE-A1- 10 125 426
- DE-C1- 4 313 568
- US-B1- 6 674 394

## Beschreibung

### Stand der Technik

Die Erfindung betrifft ein Objektortungssystem für Kraftfahrzeuge, mit einer Erkennungseinrichtung für Ein- und Ausschervorgänge.

Kraftfahrzeuge werden zunehmend mit Fahrerassistenzsystemen ausgerüstet, die den Fahrer bei der Führung des Fahrzeugs unterstützen. Ein Beispiels eines solchen Assistenzsystems ist ein radargestütztes Abstandsregelsystem, mit dem die Fahrzeuggeschwindigkeit automatisch so geregelt wird, daß ein geeigneter Sicherheitsabstand zu dem auf der eigenen Fahrspur unmittelbar vorausfahrenden Fahrzeug eingehalten wird. Generell benötigten solche Assistenzsysteme ein Objektortungssystem zur Erfassung des Verkehrsumfelds. Das Objektortungssystem kann neben einem oder mehreren Radarsensoren beispielsweise auch Lidarsensoren, Videosysteme mit elektronischer Bildverarbeitung dergleichen sowie Kombinationen solcher Sensorsysteme umfassen.

Während die bisher im Einsatz befindlichen Abstandsregelsysteme zumeist nur für den Einsatz auf Schnellstraßen vorgesehen sind, gehen neuere Entwicklungstendenzen dahin, den Anwendungsbereich solcher Systeme auf Situationen auszudehnen, die durch eine größere Dynamik des Verkehrsgeschehens gekennzeichnet sind, bis hin zum Stadtverkehr. Dabei gewinnt die möglichst frühzeitige Erkennung von Ein- und Ausschervorgängen anderer Fahrzeuge zunehmend an Bedeutung. Durch eine möglichst frühzeitige und zuverlässige Erkennung von Ein- und Ausschervorgängen wird das Assistenzsystem in die Lage versetzt, rechtzeitig eine angemessene Reaktion auszulösen, beispielsweise eine Anpassung der Geschwindigkeit des eigenen Fahrzeugs oder die Ausgabe einer Kollisionswarnung an den Fahrer oder die Aktivierung von Sicherheits funktionen im Rahmen eines Pre-Crash-Systems.

Bei bekannten radargestützten Abstandsregelsystemen wird zur Objektortung ein winkelauflösender Radarsensor eingesetzt, mit dem Abstände und Relativgeschwindigkeiten vorausfahrender Fahrzeuge, jeweils in Fahrtrichtung, direkt gemessen werden können. Aufgrund des Winkelauflösungsvermögens des Radarsensors kann auch der Azimutwinkel der Objekte gemessen werden, und aus diesem läßt sich dann anhand des gemessenen Abstands (x-Koordinate) die Querposition (y-Koordinate) des Objekts in Bezug auf die eigene Fahrspur berechnen. Ergänzend kann das Objektortungssystem ein Bildverarbeitungssystem aufweisen, das eine genauere Bestimmung der y-Koordinate ermöglicht und auch Informationen über die jeweilige Breite der georteten Objekte liefert. Anhand der gemessenen oder berechneten Querposition des Objekts wird entschieden, ob sich das Objekt auf der eigenen Fahrspur oder auf einer Nachbarspur befindet. Für die Breite der Fahrspuren wird dabei eine plausible Annahme zugrunde gelegt, sofern nicht, etwa durch Bildverarbeitung, eine direkte Bestimmung der Spurbreite erfolgt. Es sind auch Systeme bekannt, die es gestatten, durch Bildverarbeitung oder aufgrund fahrdynamischer Daten des eigenen Fahrzeugs den ggf. gekrümmten Verlauf der Fahrspuren zu bestimmen oder vorherzusagen.

Von den Objekten, die in diese Weise als Objekte auf der eigenen Fahrspur identifiziert wurden, wird in der Regel dasjenige, das den kürzesten Abstand aufweist, als Zielobjekt für die Abstandsregelung ausgewählt, während Objekte auf Nachbarspuren bei der Abstandsregelung ignoriert werden. Ein Einschervorgang, bei dem ein vorausfahrendes Fahrzeug von einer Nachbarspur auf die eigene Fahrspur wechselt, wird erkannt, wenn dieses Objekt erstmals innerhalb der (voraussichtlichen) eigenen Fahrspur, dem sogenannten Fahrschlauch, lokalisiert wird, und ggf. wird dieses Objekt dann als Zielobjekt ausgewählt. Das bedeutet, daß das Assistenzsystem erst dann auf das einscherende Fahrzeug reagieren kann, wenn dieses Fahrzeug bereits in den Fahrschlauch eingetreten ist.

Aus der US 6,674,394 ist ein Verfahren bekannt, bei dem ein Objektstandort eines 3-D-Objekts an einer Seite eines Transportfahrzeugs klassifiziert wird, wobei das Transportfahrzeug sich entlang einer von vorn nach hinten verlaufenden Richtungsachse bewegt und mit einem an einen festgelegten Bezugspunkt montierten Fernsensor ausgestattet ist. Mit Hilfe des Femsensors wird ein Satz von größtenteils an der Seite des Transportfahrzeugs befindlichen Erfassungspunkten erkannt Es wird ein Erfassungspunkt gefunden, der einen kleinsten Abstand zum Fahrzeugbezugspunkt aufweist. Das Objekt wird als "Auf Mitte" klassifiziert, wenn sich eine dem Erfassungspunkt mit dem dichtesten Abstand entsprechende Position Yₙₐₕ entlang der Richtungsachse innerhalb einer festgelegten Schwellenentfemung von einer dem festgelegten Bezugspunkt entsprechenden Position Yₙᵤₗₗ entlang der Richtungsachse befindet Wenn nicht "Auf Mitte", wird das Objekt als "Übergreifend" klassifiziert, wenn sich eine erste Position Y₁ entlang der Richtungsachse und eine zweite Position Y₂ entlang der Richtungsachse auf entgegengesetzten Seiten der Position Nₙᵤₗₗ befinden. Wenn nicht "Übergreifend", wird das Objekt als "Vom" klassifiziert, wenn sich jeder einzelne Erfassungspunkt vor der Position Yₙᵤₗₗ befindet. Wenn nicht "Übergreifend", wird das Objekt als "Hinten" klassifiziert, wenn sich jeder einzelne Erfassungspunkt hinter der Position Yₙᵤₗₗ befindet.

Aus der DE 10125 426 A1 ist ein Wamsystem für ein Fahrzeug mit einem Abstandssensor bekannt, der zur Erfassung eines Bereichs vorgesehen ist, wobei der Bereich zumindest teilweise innerhalb eines toten Winkels liegt. Das Wamsystem hat Mittel zur Ermittlung einer Bewegungsrichtung eines Objekts - beispielsweise eines Fahrzeugs - retativ zu dem Fahrzeug sowie Mittel zur Erzeugung einer Warnmeldung in Abhängigkeit von der - Bewegungsrichtung des Objekts. Dies erlaubt es, nicht relevante Objekte, beispielsweise Fahrzeuge des Gegenverkehrs, auszublenden, so dass nur relevante Objekte in dem toten Winkel zur Erzeugung einer Warnmeldung führen. Zur Ausfilterung des Gegenverkehrs kann auch ein weiterer Abstandssensor zur Erfassung eines Bereichs im vorderen Bereich des Fahrzeugs eingesetzt werden.

### Vorteile der Erfindung

Die Erfindung mit den in Anspruch 1 angegebenen Merkmalen ermöglicht es, Ein- und Ausschervorgänge anderer Fahrzeuge bereits im Ansatz zu erkennen, so daß das Assistenzsystem frühzeitiger und angemessener reagieren kann.

Zu diesem Zweck weist erfindungsgemäß die Erkennungseinrichtung für die Ein- und Ausschervorgänge einen Zustandsautomaten auf. Darunter versteht man ein Datenverarbeitungssystem, das einer Anzahl von Objekten, in diesem Fall den georteten Fahrzeugen, jeweils einen von mehreren Zuständen zuweist, wobei ein System von Regeln für jeden Zustand bestimmt, in welche anderen Zustände das Objekt aus dem aktuellen Zustand wechseln kann und unter welchen Bedingungen ein solcher Wechsel erfolgt. Die vordefinierten Zustände beziehen sich bei dem erfindungsgemäßen System auf die aktuelle oder voraussichtliche Position des Objekts in Bezug auf die Fahrspuren der Fahrbahn. Die Bedingungen für einen Zustandswechsel beinhalten Kriterien, die sich auf die Ortungsdaten des betreffenden Objekts beziehen, insbesondere dessen Querposition und/oder die zeitliche Änderung der Querposition. Die Zustände der Objekte werden jeweils anhand der neuesten Ortungsdaten aktualisiert. Mindestens einer der vorliegenden Zustände ist ein Übergangszustand, der einen Ein- oder Ausschervorgang kennzeichnet, also ein Zustand, in dem das Objekt im Begriff ist, in den Fahrschlauch einzutreten bzw. den Fahrschlauch zu verlassen.

Der besondere Vorteil dieses Systems besteht darin, daß sämtliche Objekte, auch die Objekte, die sich derzeit noch auf Nebenspuren befinden, fortlaufend im Hinblick darauf überwacht werden, ob ein Spurwechsel bevorsteht oder stattfindet. Ein Ein- oder Ausschervorgang wird nicht erst dann erkannt, wenn das betreffende Objekt in den eigenen Fahrschlauch eingetreten ist oder diesen verlassen hat, sondern bereits dann, wenn das Objekt in den Übergangszustand eingetreten ist, der diesem Ereignis vorausgeht.

Vorteilhafte Weiterbildungen und Ausgestaltungen der Erfindung ergeben sich aus den Unteransprüchen.

Die Bedingungen für den Wechsel eines Objekts in einen Übergangszustand schließen bevorzugt ein Kriterium ein, das sich auf eine Prädiktion, also einen Vorhersagewert, für die Querposition y des Objekts bezieht. Diese Prädiktion beruht auf einer Extrapolation der Querbewegung des Objekts in die Zukunft. Zu diesem Zweck kann beispielsweise eine Prädiktionsweite definiert werden, die vorzugsweise in Abhängigkeit von der Geschwindigkeit des eigenen Fahrzeugs variabel ist. Die Prädiktion gibt dann an, welche Querposition y das Objekt voraussichtlich haben wird, nachdem es längs der Fahrbahn einen der Prädiktionsweite entsprechenden Weg zurückgelegt hat. Im einfachsten Fall ist die Prädiktion eine lineare Extrapolation der Querbewegung, proportional zur ersten zeitlichen Ableitung der Querposition. Es ist jedoch auch eine nichtlineare Extrapolation unter Berücksichtigung höherer zeitlicher Ableitungen der Querposition möglich.

Bevorzugt beruht das Kriterium für den Eintritt in einen Übergangszustand auch auf einer Prädiktion für den Verlauf der Fahrspuren, so daß auch einem gekrümmten Fahrbahnverlauf Rechnung getragen werden kann.

Der Fahrschlauch ist definiert durch die linken und rechten Grenzen der eigenen Fahrspur. Im einfachsten Fall werden diese Grenzen bestimmt, indem für die Breite der Fahrspur ein Standardwert zugrunde gelegt wird und angenommen wird, daß sich das eigene Fahrzeug auf der Mitte der Fahrspur befindet. Sofern ein Bildverarbeitungssystem vorhanden ist, können die Grenzen des Fahrschlauches auch anhand der Fahrbahnmarkierungen bestimmt werden. Eine weitere Möglichkeit ist die statistische Auswertung der Querpositionen von Fahrzeugen auf den linken und rechten Nebenspuren unter der Annahme, daß der statistische Mittelwert der Querpositionen für die Fahrzeuge auf einer Nebenspur annähernd der Mitte dieser Nebenspur entspricht.

Es sind auch bereits verschiedene Verfahren zur Prädiktion der Krümmung des Fahrschlauches bekannt. Eines dieser Verfahren beruht auf der Auswertung von fahrdynamischen Daten des eigenen Fahrzeugs, beispielsweise der Querbeschleunigung oder der Giergeschwindigkeit in Verbindung mit der Absolutgeschwindigkeit. Andere Verfahren beruhen wieder auf der statistischen Auswertung der Querpositionen und der Änderungen der Querpositionen vorausfahrender Fahrzeuge. Im Fall eines Radar-Ortungssystems ist es auch möglich, die Signale von stationären Radarzielen am Fahrbahnrand, beispielsweise von Leitplankenpfosten oder dergleichen, zur Bestimmung der Krümmung des Fahrschlauches heranzuziehen.

Sofern das Ortungssystem die Möglichkeit bietet auch die Objektbreite zu messen, beispielsweise im Fall eines Bildverarbeitungssystems, ist es bevorzugt, daß in die Kriterien für Zustandswechsel auch die Breite des jeweiligen Objekts eingeht.

Sofern keine Breiteninformation über die Objekte zur Verfügung steht, werden die Kriterien für Zustandswechsel vorzugsweise so definiert, daß immer der ungünstigste Fall angenommen wird, d. h., daß sich das Radar-Reflexionszentrum des Objekts auf der fahrbahnäußeren Seite befindet. Die fehlende Breiteninformation kann zumindest teilweise dadurch ausgeglichen werden, daß die Querposition und/oder Quergeschwindigkeit des Objekt über einen längeren Zeitraum verfolgt wird, so daß sich Fehler, die aus der unbestimmten Lage des Reflexionszentrums resultieren, mit der Zeit herausmitteln.

Die vordefinierten Zustände der Objekt umfassen vorzugsweise eine Anzahl von Basiszuständen, die - ohne Prädiktion in die Zukunft - die aktuelle Position des Objekts angeben. Neben den Basiszuständen und den Übergangszuständen kann es weitere Zustände geben, in denen die Zuordnung eines Objekts zu der Fahrspur weniger gewiß ist, ohne daß es bereits eindeutige Indizien für einen Spurwechsel gibt. Bevorzugt ist jeder Zustand durch einen Zustandsparameter gekennzeichnet, dessen Vorzeichen die Lage des Objekts rechts oder links von der Mitte der eigenen Fahrspur angibt und dessen Absolutbetrag als Relevanzparameter dienen kann, der angibt, mit welcher Wahrscheinlichkeit das betreffende Objekt im nach geschaltetem Assistenzsystem als ein relevantes Objekt behandelt werden muß.

Gemäß einer Ausführungsform erfolgt nur bei Erkennung eines neuen Objektes eine einmalige Zuordnung zu einem der Basiszustände. Danach ist ein Wechsel in einen der anderen Zustände nur nach Maßgabe der geltenden Regeln in Abhängigkeit von den neuen Ortungsdaten für das Objekt möglich.

In einer anderen Ausführungsform erfolgt in jedem Taktzyklus des Zustandsautomaten eine Neubestimmung des Basiszustands anhand der aktuellen Ortungsdaten. Danach erfolgt dann in demselben Zyklus gegebenenfalls ein Wechsel in einen der anderen Zustände. Diese Ausführungsform hat den Vorteil einer größeren Robustheit, insbesondere gegenüber Spurwechseln des eigenen Fahrzeugs.

### Zeichnung

Ausführungsbeispiele der Erfindung sind in den Zeichnungen dargestellt und in der nachfolgenden Beschreibung näher erläutert.

Es zeigen:
- Figur 1: ein Blockdiagramm eines erfindungsgemäßen Ortungssystems;
- Figuren 2 und 3: Diagramme zur Erläuterung der Arbeits weise des Ortungssystems;
- Figur 4: ein Diagramm eines Zustandsautomaten gemäß einer ersten Ausführungsform der Erfindung;
- Figur 5: ein Diagramm eines Zustandsautomaten gemäß einer zweiten Ausführungsform;
- Figur 6: eine Abwandlung des Zustandsautomaten gemäß Figur 5; und
- Figur 7: ein Diagramm eines Zustandsautomaten gemäß einer weiteren Ausführungsform.

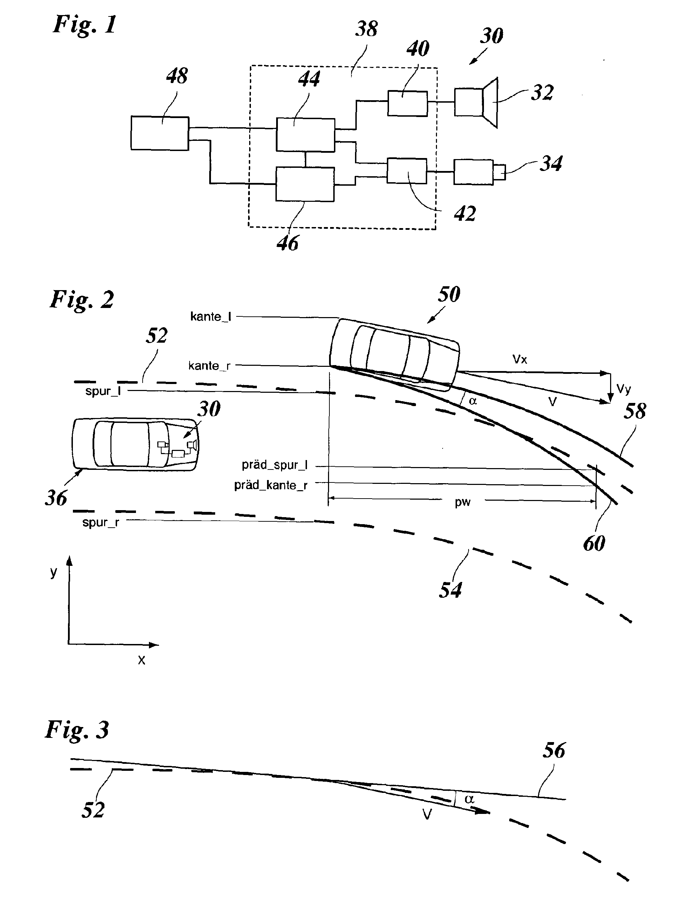

Das in Figur 1 gezeigte Ortungssystem 30 umfaßt als Sensorkomponenten einen Radarsensor 32 und eine Videokamera 34, die so in ein Fahrzeug 36 (Figur 2) eingebaut sind, daß sie das Vorfeld des Fahrzeugs beobachten. Eine Auswerteeinheit 38 des Ortungssystems hält eine Datenaufbereitungseinheit 40 für die Daten des Radarsensors 32, eine Bildverarbeitungseinheit 42 für die von der Videokamera 34 aufgenommenen Bilder, ein Tracking-Modul 44 und einen Zustandgautomaten 46, der als Erkennungseinrichtung für Ein- und Ausschervorgänge dient. Die Datenaufbereitungseinheit 30 berechnet anhand der vom Radarsensor 32 gelieferten Signale die Ortungsdaten der vom Radarsensor georteten Objekte, insbesondere die vorausfahrender Fahrzeuge. Bei diesen Ortungsdaten handelt es sich um die Abstände und Relativgeschwindigkeiten der Objekte sowie die Azimutwinkel, unter denen die Objekte in bezug auf die Längsachse des Fahrzeugs erscheinen. Diese Ortungsdaten werden periodisch, mit einem vorbestimmten Taktzyklus, an das Tracking-Modul 44 übermittelt. Die Bildverarbeitungseinheit 42 extrahiert aus den Bilddaten zusätzliche Information, die sich auf die Geometrie der georteten Objekte sowie auf die Fahrbahngeometrie beziehen. Die objektbezogenen Daten werden an das Tracking-Modul 44 übermittelt, während die Fahrbahndaten an den Zustandsautomaten 46 übermittelt werden.

Das Tracking-Modul 44 ist dazu ausgebildet, nach einem bekannten Algorithmus die im aktuellen Meßzyklus erhaltenen Ortungsdaten mit den Daten aus vorangegangenen Zyklen zu vergleichen und die im aktuellen Zyklus georteten Objekte mit den früher georteten Objekten zu identifizieren, so daß die Objekte über einen längeren Zeitraum verfolgt werden können. In diesem Zusammenhang erstellt das Tracking -Modul eine Liste aller georteten Objekte, und diese Liste wird auch an den Zustandsautomaten 46 übergeben.

Der Zustandsautomat 46 dient dazu, die georteten Objekte den verschiedenen Fahrspuren der Fahrbahn zuzuordnen und insbesondere Ein- und Ausschervorgänge zu erkennen. Die vom Tracking-Modul und vom Zustandsautomaten 46 bereitgestellten Informationen werden dann zur weiteren Auswertung an ein Fahrerassistenzsystem 48 übermittelt, beispielsweise ein ACC-System (Adaptive Cruise Control) zur automatischen Abstandsregelung.

In Figur 2 sind das mit dem Ortungssystem 30 ausgerüstete Fahrzeug 36 und ein weiteres Fahrzeug 50 schematisch in einem x-y-Koordinatensystem dargestellt. Die x-Achse verläuft in Fahrtrichtung, also in Richtung der Längsachse des Fahrzeugs 16, und die y-Achse verläuft rechtwinklig dazu. Weiterhin sind in Figur 2 die Fahrbahnmarkierungen 52, 54 eingezeichnet, die die linken und rechten Grenzen des Fahrschlauches, d. h., der von dem Fahrzeug 36 befahrenen Fahrspur angeben.

Der Radarsensor 32 empfängt ein Radarecho von der Rückfront des Fahrzeugs 50, aus dem sich mit der Abstand x und die Relativgeschwindigkeit (in x-Richtung) sowie der Azimutwinkel des Fahrzeugs 50, genauer, eines nicht näher bekannten Reflexionszentrums an der Rückfront dieses Fahrzeugs berechnen lassen. Aus dem Abstand und dem Azimutwinkel läßt sich auch ein ungefährer Wert für die Querposition, d. h. die y -Koordinate des Fahrzeugs 50 berechnen.

Die Bildverarbeitungseinheit 42 liefert genauere Werte kante_l und kante_r für die y-Koordinaten der linken und rechten Kanten des Fahrzeugs 50. Außerdem wird durch Bildverarbeitung der Verlauf der Fahrbahnmarkierungen 52, 54 jeweils als Funktion y(x) berechnet.

Größen spur_l und spur_r geben die Lage der Fahrbahnmarkierungen 52, 54, d. h., der Grenzen des Fahrschlauches am Ort des Fahrzeugs 50 an. Im Zustandsautomaten 46 werden diese Größen mit kante_l und kante_r verglichen, um zu entscheiden, auf welcher Spur der Fahrbahn sich das Fahrzeug 50 befindet.

Für eine Erkennung von Ein- und Ausschervorgängen, beispielsweise eines Einscherens des Fahrzeugs 50 in den Fahrschlauch zwischen den Fahrbahnmarkierungen 52 und 54, ist außerdem die voraussichtliche Beziehung zwischen kante_l und kante_r einerseits und spur_l und spur_r andererseits zu einem bestimmten Zeitpunkt in der Zukunft von Interesse. Zu diesem Zweck wird eine Prädiktionsweite pw definiert, vorzugsweise in Abhängigkeit von der Eigengeschwindigkeit des Fahrzeugs 36. Weiterhin wird für die Prädiktion die vektorielle Absolutgeschwindigkeit V des Fahrzeugs 50 bestimmt. Addition der vom Radarsensor gemessenen Relativgeschwindigkeit mit der Eigengeschwindigkeit des Fahrzeugs 36 liefert die x-Komponente Vx des Fahrzeugs 50. Die y-Komponente Vy erhält man durch Differenziation von kante_l und/oder kante_r nach der Zeit. Vektorielle Addition dieser Geschwindigkeitskomponenten Vx und Vy liefert den gesuchten Geschwindigkeitsvektor V.

In Figur 3 sind die linke Fahrbahnmarkierung 52 und eine Gerade 56 eingezeichnet. Die Gerade 56 ist eine Tangente an die Fahrbahnmarkierung 52 am Ort des Fahrzeugs 50. Der Geschwindigkeitsvektor V ist hier so eingezeichnet, daß sein Ursprung im Berührungspunkt der Fahrbahnmarkierung 52 und der Geraden 56 liegt. Der Geschwindigkeitsvektor V bildet mit der Geraden 56 einen Winkel a, der sich rechnerisch bestimmen läßt. Im gezeigten Beispiel gibt der Winkel α an , daß sich das Fahrzeug 50 auf die Fahrbahnmarkierung 52 und damit auf den Fahrschlauch des Fahrzeugs 36 zu bewegt.

Für eine Prädiktion der Verhältnisse zu einem späteren Zeitpunkt, wenn das Fahrzeug 50 eine der Prädiktionsweite pw entsprechende Strecke zurückgelegt hat, wird ein Abbild der Fahrbahnmarkierung 52 an die rechte Kante des Fahrzeugs 50 angelegt, wie in Figur 2 durch eine Kurve 58 veranschaulicht wird. Die Kurve 58 wird dann um den oben erwähnten Winkel α gedreht. Man erhält so eine Kurve 60, die die voraussichtliche Änderung der Größe kante_r angibt. Man erkennt, daß die Kurve 60 die Fahrbahnmarkierung 52 schneidet, d. h., daß das Fahrzeug 50 voraussichtlich in den Fahrschlauch eintreten wird. Die Größe präd_spur_l gibt die y-Koordinate der Fahrbahnmarkierung 52 bei der x-Koordinate an, die um pw vor dem Fahrzeug 50 liegt. Entsprechend gibt die Größe präd_kante_r die y - Koordinate der Kurve 60 an diesem Ort an. Ein Vergleich dieser beiden Größen liefert im gezeigten Beispiel die Vorhersage, daß das Fahrzeug 50 in den Fahrschlauch des Fahrzeugs 36 eintreten wird.

In der oben beschriebenen Weise werden durch den Zustandsautomaten 46 periodisch die Ortungsdaten aller georteten Objekte (Fahrzeuge) ausgewertet. Der Auswertezyklus des Zustandsautomaten 46 kann vom Meßzyklus der Datenaufbereitungseinheit 40 und der Bildverarbeitungseinheit 42 verschieden sein, kann jedoch auch damit synchronisiert sein, so daß die Auswertung im Zustandsautomaten 46 immer dann erfolgt, wenn neue Ortungsdaten vorliegen.

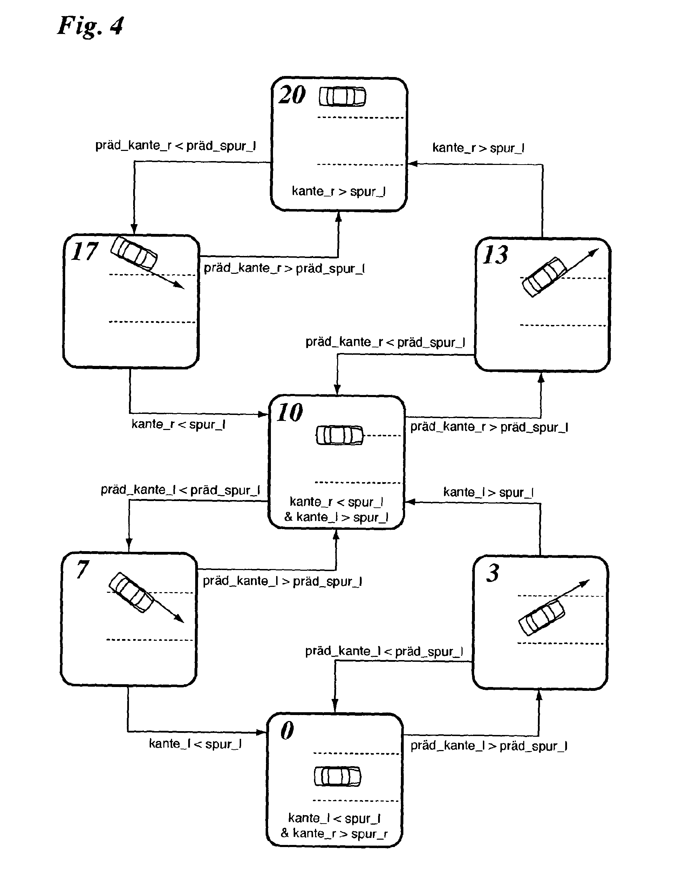

Die Arbeitsweise des Zustandsautomaten 46 soll nun anhand des in Figur 4 gezeigten Zustandsdiagramms näher erläutert werden.

Im Zustandsgenerator sind im gezeigten Beispiel dreizehn verschiedene Zustände definiert, die jedes geortete Objekt annehmen kann. Diese Zustände sind gekennzeichnet durch Zustandsparameter ±20, ±17, ±13, ±10, ±7, ±3 und 0. Ein positives Vorzeichen des Zustandsparameters gibt an, daß sich das betreffende Objekt auf der linken Seite der

Fahrschlauchmitte befindet, und ein negatives Vorzeichen kennzeichnet Zustände rechts von der Fahrschlauchmitte. In Figur 4 sind lediglich die positiven Zustände für die linke Fahrspur gezeigt. Für die nicht gezeigten Zustände für die rechte Fahrspur gelten die nachstehenden Erörterungen analog.

Die Zustände ±20, ±10 und 0 sind Basiszustände, die angeben, wo sich das Objekt befindet, ohne daß eine Prädiktion für die Zukunft berücksichtigt wird. Beispielsweise ist der Zustand 20 gekennzeichnet durch die Bedingung kante_r > spur_l, d. h., das Objekt befindet sich links vom Fahrschlauch auf der linken Nebenspur. Im Zustand 0 gelten die Bedingungen kante_l > spur_l und kante_r > spur_r, d. h., das Objekt befindet sich im Fahrschlauch. Im Zustand 10 gilt die Bedingung kante_r < spur_l und kante_l > spur_l, d. h., das Objekt befindet sich auf der linken Fahrschlauchgrenze.

Wenn ein Objekt erstmals vom Ortungssystem geortet wird, so wird es in einen der Basiszustände eingeordnet. Im weiteren Verlauf der Tracking-Prozedur wird das Objekt dann verfolgt, und gegebenenfalls wird der Zustand anhand der neuen Ortungsdaten geändert. Dabei sind jedoch nur solche Zustandsänderungen zulässig, die in Figur 4 durch Pfeile symbolisiert sind. Zum Beispiel ist aus dem Zustand 20 nur ein Wechsel in den Zustand 17 möglich, nämlich dann, wenn die Bedingung gilt: präd_kante_r < präd_spur_l. Der Zustand 17 kennzeichnet somit eine Situation, in der sich das Objekt zwar noch auf der linken Nebenspur befindet, aber sich dem eigenen Fahrschlauch annähert. Wenn das Fahrzeug sich wieder von der Fahrbahnmarkierung entfernt (präd_kante_r > präd_spur_l), kehrt das Objekt wieder in den Zustand 20 zurück. Nähert sich das Objekt dagegen weiter der Fahrbahnmarkierung an, wird schließlich die Bedingung kante_r < spur_l erfüllt, und das Objekt geht in den Zustand 10 über.

Wenn im Zustand 10 die Bedingung präd_kante_l < präd_spur_l erfüllt wird, so wechselt das Objekt in den Zustand 7. Das Objekt befindet sich dann auf der linken Fahrspurmarkierung 52 und bewegt sich weiter in den eigenen Fahrschlauch hinein. Der Zustand 7 ist deshalb ein Übergangszustand, der ein Einscheren des Objekts in den eigenen Fahrschlauch kennzeichnet. Dieses Einscheren wird an das Assistenzsystem 48 gemeldet und veranlaßt dieses System beispielsweise, die Geschwindigkeit des Fahrzeugs 36 zu reduzieren, um einen ausreichenden Sicherheitsabstand zu dem einscherenden Fahrzeug aufzubauen.

Der Übergangszustand 7 kann nur auf zwei Wegen wieder verlassen werden, nämlich entweder in den Zustand 0, wenn das Objekt tatsächlich eingeschert ist, oder zurück in den Zustand 10, wenn das Objekt sich wieder auf die linke Nebenspur zu bewegt (präd-kante_l > präd_spur_l).

Aus dem Basiszustand 0 ist nur ein Wechsel in den Zustand 3 oder -3 möglich. Der Wechsel in den Zustand 3 erfolgt, wenn sich das Fahrzeug wieder der linken Spurgrenze annähert (präd_kante_l > präd-spur_l). Kehrt das Objekt dann wieder zur Mitte des Fahrschlauches zurück, so wechselt der Zustand wieder zu 0. Andernfalls wird der Zustand 10 erreicht, wenn die linke Kante des Objekts die Fahrbahnmarkierung überquert.

Wenn sich das Objekt im Zustand 10 befindet und sich weiter in Richtung auf die linke Nebenspur bewegt (präd_kante_r > präd_spur_l), so wechselt das Objekt in den Zustand 13, der wieder ein Übergangszustand ist, diesmal für das Ausscheren des Objekts aus dem Fahrschlauch. Der Zustand 13 wird verlassen entweder in Richtung auf den Zustand 10 (präd_kante-r < präd_spur_l) oder in Richtung auf den Zustand 20 (kante_r > spur_l).

Wenn sich ein Objekt in dem Übergangszustand 13 befindet, erhält das Fahrerassistenzsystem 48 die Meldung, daß dieses Objekt voraussichtlich demnächst nicht mehr bei der Abstandsregelung berücksichtigt zu werden braucht, so daß das Fahrzeug 36 wieder auf die Fahrer gewählte Wunschgeschwindigkeit beschleunigt werden kann. Für die in Figur 4 nicht berücksichtigte rechte Nebenspur sind die Übergangszustände die Zustände -7 für das Einscheren und -13 für das Ausscheren.

Die Zustandsparameter sind im gezeigten Beispiel so gewählt, daß sie im nachgeschalteten Fahrerassistenzsystem 48 als Relevanzparameter für das betreffende Objekt benutzt werden können. Je kleiner der Absolutbetrag des Zustandsparameters ist, desto relevanter ist das Objekt für das Verkehrsgeschehen im Fahrschlauch des Fahrzeugs 36.

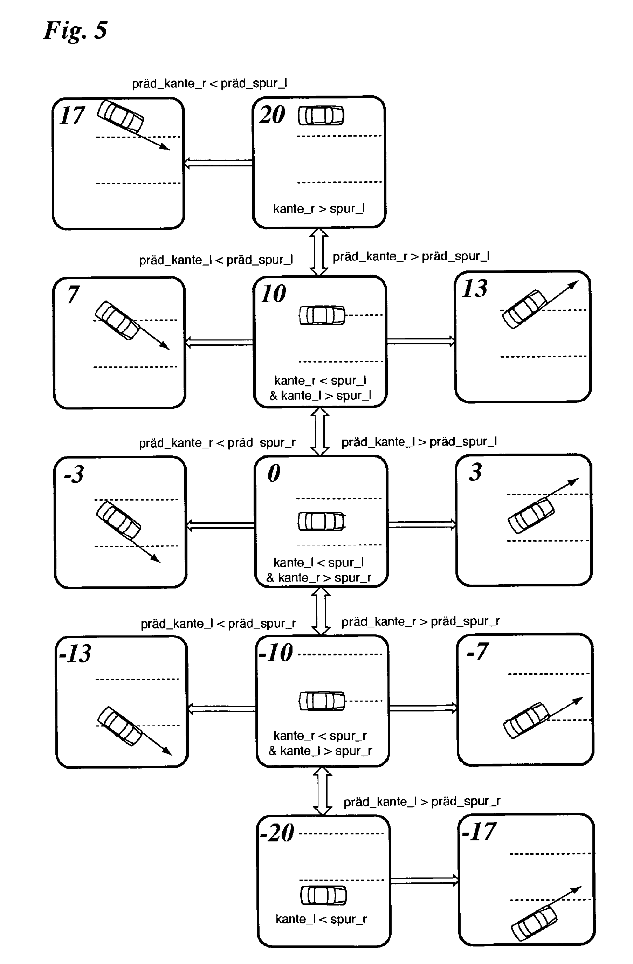

Figur 5 zeigt ein Diagramm analog zu Figur 4 für ein abgewandeltes Ausführungsbeispiel. Der wesentliche Unterschied zu dem Beispiel nach Figur 4 besteht in Figur 5 darin, daß in jedem Auswertezyklus des Zustandsautomaten 46 zunächst eine Neubestimmung des Basiszustands für jedes Objekt stattfindet. Jedes Objekt kann deshalb in jedem Zyklus jeden der fünf Basiszustände (mittlere Spalte in Figur 5) erreichen, unabhängig davon, in welchem Zustand es sich vorher befunden hat. Wenn das Objekt auf diese Weise einen der Basiszustände erreicht hat, beispielsweise den Zustand 10, werden noch im selben Auswertezyklus die Kriterien (präd_kante_l < präd_spur_l oder präd_kante_r > präd_spur_l) für den Wechsel in einen der zugeordneten Zustände (7 oder 13) geprüft, und je nach Ergebnis wechselt das Objekt in einen der Zustände 7, 13 oder es bleibt im Zustand 10.

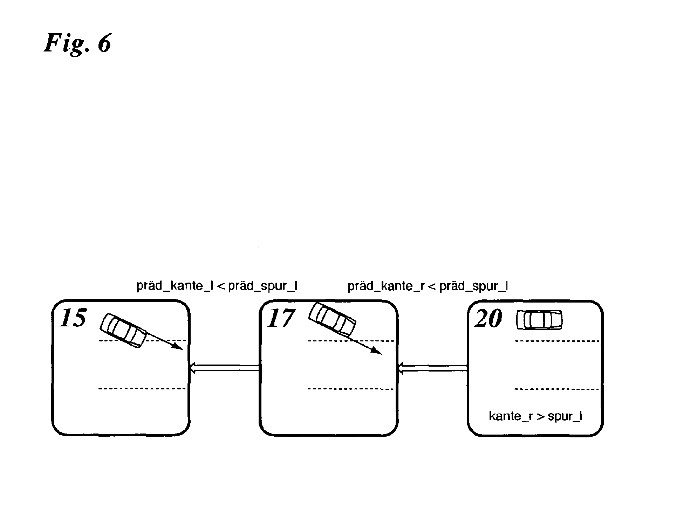

Figur 6 illustriert eine Weiterbildung der Ausführungsform nach Figur 5, bei der zusätzliche Zustände und Übergangskriterien definiert sind. Wenn ein Objekt beispielsweise in einen bestimmten Auswertezyklus in den Basiszustand 20 gelangt ist und dann aufgrund der Bedingung präd_kante_r < präd-spur_l in den Zustand 17 übergeht, so kann es aus diesem Zustand weiter in den Zustand 15 übergehen, wenn auch die Bedingung präd_kante_l < präd-spur_l erfüllt ist. In diesem Zustand 15 befindet sich das Objekt zwar immer noch außerhalb des Fahrschlauches, aber es nähert sich der Fahrschlauchgrenze noch nachdrücklicher als im Zustand 17, da hier eine strengere Bedingung erfüllt ist. Der Zustand 15 hat deshalb für das Fahrerassistenzsystem 48 eine höhere Relevanz.

Auf analoge Weise lassen sich zusätzliche Zustände und Kriterien auch für die übrigen Basiszustände definieren.

Es sollte an dieser Stelle bemerkt werden, daß sich die Kriterien für Zustandswechsel nicht auf die Auswertung von Ortungsdaten für das betreffende Objekt beschränken müssen. Als ergänzendes Kriterium käme beispielsweise auch das Setzen des Fahrtrichtungsanzeigers (Blinker links oder rechts) in Betracht, das von der Bildverarbeitungseinheit 42 erkannt werden kann. Dieses Kriterium kann z. B. Berücksichtigung finden, indem zusätzliche Zustände definiert werden oder indem in Abhängigkeit von diesem Kriterium die Prädiktionsweite pw für das betreffende Objekt variiert wird. Eine größere Prädiktionsweite hat z. B. zur Folge, daß das System empfindlicher auf Querbewegungen des Objekts reagiert.

Weiterhin ist es denkbar, als zusätzliche Kriterien für Zustandswechsel auch die Beziehungen zwischen Bewegungsdaten verschiedener Objekt heranzuziehen. Als Beispiel kann der Fall betrachtet werden, daß das eigene Fahrzeug 36 gerade ein langsameres Fahrzeug A auf der rechten Nebenspur überholt, und daß vor diesem Fahrzeug A auf der rechten Nebenspur ein noch langsameres Fahrzeug B fährt. Es ist dann wahrscheinlich, daß das Fahrzeug A auf die Überholspur, also den Fahrschlauch des Fahrzeugs 36, einschert, um das Fahrzeug B zu überholen. Dies gilt natürlich erst recht, wenn der Radarsensor 32 gleichzeitig erkennt, daß das Fahrzeug A beschleunigt. Andererseits spricht eine Verzögerung des Fahrzeugs A dafür , daß dieses Fahrzeug doch nicht einscheren wird.

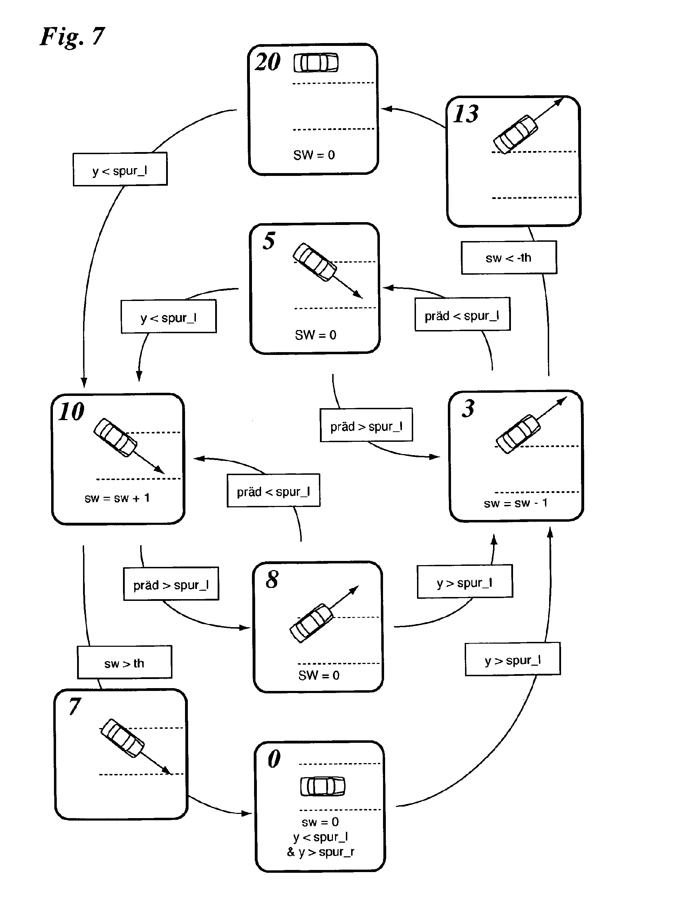

Bei den bisher beschriebenen Ausführungsbeispielen wurde davon ausgegangen, daß die Größen kante_l und kante_r durch das Ortungssystem erfaßbar sind und somit implizit auch eine Information über die Breite des Objekts vorliegt. Figur 7 zeigt ein Ausführungsbeispiel, das an Ortungssysteme angepaßt ist, die keine Breiteninformation liefern, aber beispielsweise an Systeme, die als Sensorkomponente lediglich den Radarsensor 32 enthalten.

Speziell illustriert Figur 7 eine Variante, bei der ähnlich wie in Figur 4 eine Erstbestimmung des Basiszustands nur einmal, nämlich bei der ersten Erkennung eines neuen Objekts erfolgt. Auch hier sind wieder nur die Zustände mit positivem Zustandsparameter dargestellt, also Zustände, die sich auf die linke Nebenspur beziehen.

Da keine Breiteninformation vorliegt, wird die Querposition eines Objekts hier nur durch eine einzige Meßgröße y gekennzeichnet, die die y-Koordinate des Reflexionszentrums des Objekts angibt. Als Basiszustände treten hier nur die Zustände ±20 und 0 auf.

Wenn y größer ist als spur_l, wird das Objekt in den Basiszustand 20 eingeordnet. In diesem Zustand wird ein Spurwechselparameter sw auf 0 gesetzt. Aus dem Zustand 20 ist nur ein Wechsel in den Zustand 10 möglich, nämlich dann, wenn y kleiner wird als spur_l. Bei Eintritt in den Zustand 10 wird der Spurwechselparameter sw um 1 erhöht. Wenn im nächsten Auswertezyklus des Zustandsautomaten 46 immer noch die Bedingung y < spur_l erfüllt ist, wird der Spurwechselparameter sw wiederum um 1 erhöht. Dieser Vorgang wiederholt sich, bis der Spurwechselparameter einen bestimmten Schwellenwert th (beispielsweise 2) überschreitet. Dann erfolgt ein Übergang von dem Zustand 10 in den Zustand 7, der das Einscheren in den Fahrschlauch kennzeichnet.

Vom Zustand 7 erfolgt dann unmittelbar ein Übergang in den Basiszustand 0. Dadurch, daß der Übergangszustand 7 nicht sofort erreicht wird, wenn y erstmals unter spur_l sinkt, wird dem Umstand Rechnung getragen, daß bei diesem Ortungssystem die Messung der y-Koordinate mit einer erheblichen Unsicherheit behaftet ist.

Der Zustandsautomat bleibt so lange im Zustand 0, wie die Bedingungen y < spur_l und y > spur_r erfüllt sind. Ebenso wird ein Objekt in den Basiszustand 0 eingeordnet, wenn diese Bedingungen bei der erstmaligen Ortung des Objekts erfüllt sind.

Der Spurwechselparameter sw wird im Zustand 0 wieder auf 0 gesetzt.

Der Zustand 0 wird in Richtung auf den Zustand 3 verlassen, wenn die Bedingung y > spur_l erfüllt ist (oder in Richtung auf den nicht gezeigten Zustand -3, wenn die Bedingung y < spur_r erfüllt ist). Im Zustand 3 wird der Spurwechselparameter schrittweise verringert, solange die Bedingung y > spur_l weiterhin erfüllt ist, bis der Spurwechselparameter den Schwellenwert -th unterschreitet. Bei Unterschreitung des Schwellenwertes erfolgt ein Wechsel in den Übergangszustand 13, der ein Ausscheren kennzeichnet. Auf den Zustand 13 erfolgt dann wieder ein unmittelbarer Übergang in den Zustand 20.

In den Zuständen 10 und 3 wird außerdem ein Prädiktionswert präd überprüft, der analog zu den Größen präd_kante_l und präd_kante_r definiert ist, nur mit dem Unterschied, daß die Kurve 60 (Figur 2) nun an die mit Hilfe des Radarsensors bestimmte y-Koordinate des Objekts angelegt wird. Wenn im Zustand 10 die Bedingung präd > spur_l erfüllt ist, d. h., wenn sich das Objekt vom eigenen Fahrschlauch weg bewegt, so wird der Zustand 10 in Richtung auf einen neuen Zustand 8 verlassen, in dem der Spurwechselparameter sw wieder auf 0 zurückgesetzt wird. Wenn das Objekt wieder die Fahrbahnmarkierung 52 überschreitet(y > spur_l), erfolgt ein Übergang in den Zustand 3. Führt dagegen das Objekt eine erneute Richtungsänderung aus, so daß wieder präd < spur_l gilt, so kehrt das System in Zustand 10 zurück und der Spurwechselparameter, der im Zustand 8 auf 0 zurückgesetzt wurde, wird wieder schrittweise erhöht.

Entsprechend wird, wenn im Zustand 3 die Bedingung präd < spur_l festgestellt wird, d. h., wenn sich das Objekt wieder dem Fahrschlauch annähert, ein Zustand 5 erreicht, in dem der Spurwechselparameter auf 0 zurückgesetzt wird. Von hier ist ein Übergang in den Zustand 10 möglich, wenn die Bedingung y < spur_l erfüllt ist, oder eine Rückkehr in den Zustand 3, wenn wieder die Bedingung präd > spur_l erfüllt ist.

## Patentansprüche

1. Objektortungssystem für Kraftfahrzeuge (36), mit einer Erkennungseinrichtung für Ein - und Ausschervorgänge mittels des Objektortungssystems detektierter Fahrzeuge, daß die Erkennungseinrichtung einen Zustandsautomaten (46) aufweist, der jedem georteten Objekt (50) einen von mehreren vordefinierten, auf die Querposition des Objekts bezogenen Zuständen (20, 17, 13, 10, 7, 3, 0) zuweist **dadurch gekennzeichnet, daß** die Zustandszuweisungen wiederholt nach vorbestimmten Regeln anhand der jeweils neuesten Ortungsdaten aktualisiert, und daß mindestens einer der vordefinierten Zustände ein Übergangszustand (13, 7) ist, der einen Ein- oder Ausschervorgang kennzeichnet, daß der Zustandsautomat (46) dazu ausgebildet ist, den einem Objekt zugewiesenen Zustand nach den vorbestimmten Regeln zu ändern, wobei diese vorbestimmten Regeln für jeden Zustandswechsel ein Kriterium beinhalten, das von den Ortungsdaten zu erfüllen ist, und daß sich mindestens eines dieser Kriterien auf einen aus den Bewegungsdaten des Objekts berechneten Vorhersagewert (präd_kante_l, präd_kante_r; präd) für die Querposition des Objekts bezieht und daß das Objektortungssystem dazu ausgebildet ist, den voraussichtlichen Verlauf linker und rechter Grenzen (52, 54) der von dem eigenen Fahrzeug (36) befahrenen Fahrspur zu bestimmen, und daß das Kriterium, das sich auf den Vorhersagewert bezieht, eine vorgegebene Beziehung zwischen dem Vorhersagewert (präd_kante_l, präd_kante_r) für die Querposition des Objekts und einen entsprechenden Vorhersagewert (präd_spur_l, präd_spur_r) für die Lage der Fahrspurgrenze definiert.

2. Objektortungssystem nach Anspruch 1, **dadurch gekennzeichnet, daß** der Zustandsautomat (46) dazu ausgebildet ist, eine Prädiktionsweite (pw), die der Berechnung der Vorhersagewerte zugrunde liegt, geschwindigkeitsabhängig zu variieren.

3. Objektortungssystem nach einem der vorstehenden Ansprüche, **dadurch gekennzeichnet, daß** die vordefinierten Zustände mehrere Basiszustände (20, 10 ,0) umfassen, welche ohne Prädiktion in die Zukunft die aktuelle Position des Objekts angeben, daß die übrigen Zustände (17, 13, 7, 3) nur über einen der Basiszustände erreichbar sind und daß der Zustandsautomat (46) dazu ausgebildet ist, einem Objekt einen Basiszustand zuzuweisen, wenn es erstmals geortet wird, und bei den nachfolgenden Aktualisierungen der Zustandszuweisungen für dieses Objekt den Zustand nach Maßgabe der vorbestimmten Regeln in Abhängigkeit vom bisherigen Zustand zu ändern.

4. Objektortungssystem nach einem der Ansprüche 1 bis 2, **dadurch gekennzeichnet, daß** die vordefinierten Zustände mehrere Basiszustände (20, 10, 0, -10, -20) umfassen, welche ohne Prädiktion in die Zukunft die aktuelle Position des Objekts angeben, daß die übrigen Zustände jeweils nur über einen der Basiszustände erreichbar sind, und daß der Zustandsautomat (46) dazu ausgebildet ist, jedem Objekt bei jeder Aktualisierung zunächst einen der Basiszustände und dann nach Maßgabe der vorbestimmten Regeln einen der anderen Zustände zuzuweisen oder es in dem Basiszustand zu belassen.

5. Objektortungssystem nach einem der vorstehenden Ansprüche, **dadurch gekennzeichnet, daß** es eine Sensorkomponente (34) enthält, mit der sich Breiteninformation über die georteten Objekte gewinnen läßt, und daß die Ortungsdaten Größen (kante_l, kante_r) umfassen, die die Querpositionen der linken und rechten Kanten des Objekts angeben.

6. Objektortungssystem nach einem der Ansprüche 1 bis 4, **dadurch gekennzeichnet, daß** der Zustandsautomat (46) dazu ausgebildet ist, bei jeder Aktualisierung der Zustandszuweisung einen Spurwechselparameter (sw) abhängig von den Ortungsdaten um eine bestimmtes Inkrement zu erhöhen oder zu verringern oder auf null zurückzusetzen und einem Objekt nur dann einen Übergangszustand (13, 7) zuzuweisen, wenn der Spurwechselparameter einen bestimmten Schwellenwert (th, -th) über- oder unterschreitet.

## Claims

1. Object-locating system for motor vehicles (36) having a detection device for cutting in and cutting out manoeuvres of vehicles which are detected by means of the object-locating system, wherein the detection device has an automatic state system (46) which assigns to each located object (50) one of a plurality of predefined states (20, 17, 13, 10, 7, 3, 0) which are related to the lateral position of the object, **characterized in that** the state assignments are updated repeatedly according to predetermined rules on the basis of the respectively latest locating data, and **in that** at least one of the predefined states is a transition state (13, 7) which characterizes a cutting in or cutting out manoeuvre, **in that** the automatic state system (46) is designed to change the state assigned to an object in accordance with the predetermined rules, wherein these predetermined rules contain, for each change of state, a criterion which is to be met by the locating data, and **in that** at least one of these criteria relates to a prediction value (pred_edge_l, pred_edge_r; pred), calculated from the movement data of the object, for the lateral position of the object, and **in that** the object-locating system is designed to determine the predicted course of the left and right boundaries (52, 54) of the lane being travelled on by the vehicle (36), and **in that** the criterion which relates to the prediction value defines a predetermined relationship between the prediction value (pred_edge_l, pred_edge_r) for the lateral position of the object and a corresponding prediction value (pred_lane_l, pred_lane_r) for the position of the lane boundary.

2. Object-locating system according to Claim 1, **characterized in that** the automatic state system (46) is designed to vary, as a function of the speed, a prediction width (pw) which is the basis for the calculation of the prediction values.

3. Object-locating system according to one of the preceding claims, **characterized in that** the predefined states comprise a plurality of basic states (20, 10, 0) which indicate the current position of the object without prediction into the future, **in that** the other states (17, 13, 7, 3) can be reached only via one of the basic states, and **in that** the automatic state system (46) is designed to assign to an object a basic state if it has been located for the first time, and to change the state in accordance with the predetermined rules as a function of the previous state during the subsequent updates of the state assignments for this object.

4. Object-locating system according to one of Claims 1 to 2, **characterized in that** the predefined states comprise a plurality of basic states (20, 10, 0, -10, -20) which indicate the current position of the object without prediction into the future, **in that** the other states can each be reached only via one of the basic states, and **in that** the automatic state system (46) is designed firstly to assign one of the basic states to each object during each update and then to assign one of the other states in accordance with the predetermined rules or to leave it in the basic state.

5. Object-locating system according to one of the preceding claims, **characterized in that** said object-locating system contains a sensor component (34) with which width information relating to the located objects can be acquired, and **in that** the locating data comprise variables (edge_l, edge_r) which indicate the lateral position of the left-hand and right-hand edges of the object.

6. Object-locating system according to one of Claims 1 to 4, **characterized in that** the automatic state system (46) is designed to increase or reduce a lane change parameter (1c) as a function of the locating data by a specific increment at each update of the state assignment or to reset said lane change parameter (lc) to zero and to assign a transition state (13, 7) to an object only if the lane change parameter exceeds or undershoots a specific threshold value (th, -th).

## Revendications

1. Système de localisation d'objet pour véhicules automobiles (36), comprenant un dispositif de détection pour des manoeuvres d'insertion dans une file de circulation et de déboîtement des véhicules détectés au moyen du système de localisation d'objet, le dispositif de détection comprenant un dispositif automatique d'état (46) qui attribue à chaque objet (50) localisé un état parmi plusieurs états (20, 17, 13, 10, 7, 3, 0) prédéfinis en rapport avec la position transversale de l'objet, **caractérisé en ce que** les attributions d'état sont actualisées de manière répétitive d'après des règles prédéfinies au moyen des données de localisation à chaque fois les plus récentes et qu'au moins l'un des états prédéfinis est un état de transition (13, 7) qui identifie la manoeuvre d'insertion dans une file de circulation ou de déboîtement, que le dispositif automatique d'état (46) est configuré pour modifier l'état attribué à un objet d'après les règles prédéfinies, ces règles prédéfinies contenant pour chaque changement d'état un critère qui doit être satisfait par les données de localisation et qu'au moins l'un de ces critères se rapporte à une valeur prévisionnelle (prâd_kante_l, prâd_kante_r ; präd) de la position transversale de l'objet calculée à partir des données de mouvement de l'objet et que le système de localisation d'objet est configuré pour déterminer le tracé prévisionnel des limites de gauche et de droite (52, 54) de la voie de circulation parcourue par le véhicule propre (36) et le critère qui se rapporte à la valeur prévisionnelle définit une relation prédéfinie entre la valeur prévisionnelle (prâd_kante_l, prâd_kante_r) de la position transversale de l'objet et une valeur prévisionnelle (prâd_spur_l, prâd_spur_r) correspondante pour la position de la limite de la voie de circulation.

2. Système de localisation d'objet selon la revendication 1, **caractérisé en ce que** le dispositif automatique d'état (46) est configuré pour faire varier, en fonction de la vitesse, une largeur de prédiction (pw) qui sert de base au calcul des valeurs prévisionnelles.

3. Système de localisation d'objet selon l'une des revendications précédentes, **caractérisé en ce que** les états prédéfinis incluent plusieurs états de base (20, 10, 0), lesquels indiquent la position actuelle de l'objet sans prédiction dans l'avenir, que les autres états (17, 13, 7, 3) ne peuvent être atteints qu'en passant par l'un des états de base et que le dispositif automatique d'état (46) est configuré pour attribuer un état de base à un objet lorsqu'il est localisé pour la première fois et, lors des actualisations des attributions d'états suivantes, modifier l'état pour cet objet d'après les indications des règles prédéfinies en fonction de l'état actuel.

4. Système de localisation d'objet selon l'une des revendications 1 à 2, **caractérisé en ce que** les états prédéfinis incluent plusieurs états de base (20, 10, 0, -10, -20), lesquels indiquent la position actuelle de l'objet sans prédiction dans l'avenir, que les autres états ne peuvent respectivement être atteints qu'en passant par l'un des états de base et que le dispositif automatique d'état (46) est configuré pour attribuer à chaque objet, lors de chaque actualisation tout d'abord l'un des états de base et ensuite, d'après les indications des règles prédéfinies, de lui attribuer l'un des autres états et de le laisser dans l'état de base.

5. Système de localisation d'objet selon l'une des revendications précédentes, **caractérisé en ce qu'**il contient un composant de détection (34) qui permet d'obtenir des informations sur la largeur des objets localisés et que les données de localisation comprennent des grandeurs (kante_l, kante_r) qui indiquent les positions transversales des bords gauche et droite de l'objet.

6. Système de localisation d'objet selon l'une des revendications 1 à 4, **caractérisé en ce que** le dispositif automatique d'état (46) est configuré pour, à chaque actualisation de l'attribution d'état, augmenter ou diminuer un paramètre de changement de voie (sw) d'un incrément donné ou le remettre à zéro, en fonction des données de localisation, et n'attribuer alors un état de transition (13, 7) à un objet que lorsque le paramètre de changement de voie est supérieur ou inférieur à une valeur de seuil (th, -th) donnée.
